# EUROPÄISCHE PATENTSCHRIFT

(11) **EP 3 386 808 B1**
(45) Veröffentlichungstag und Bekanntmachung des Hinweises auf die Patenterteilung: **04.09.2019**
(21) Anmeldenummer: 16801253.2
(22) Anmeldetag: 25.11.2016
(51) Int. Cl.: B60R 21/34, F16F 7/12, B60R 19/36, B60R 19/18

(54) **FUSSGÄNGERSCHUTZVORRICHTUNG FÜR EIN KRAFTFAHRZEUG**
PEDESTRIAN PROTECTION DEVICE FOR A MOTOR VEHICLE
DISPOSITIF DE PROTECTION DE PIÉTON POUR VÉHICULE AUTOMOBILE

(30) Priorität: 07.12.2015 DE 102015224457
(43) Veröffentlichungstag der Anmeldung: 17.10.2018
(73) Patentinhaber: Bayerische Motoren Werke Aktiengesellschaft, 80809 München (DE)
(72) Erfinder: RIEDL, Wilhelm, 85276 Pfaffenhofen (DE); AKIF, Öztzan, 80937 München (DE); FICHTINGER, Gerhard, 85630 Grasbrunn (DE)
(86) Internationale Anmeldenummer: PCT/EP2016/078816
(87) Internationale Veröffentlichungsnummer: WO 2017/097608

(56) Entgegenhaltungen:
- EP-A2- 2 266 846
- DE-A1- 10 002 724
- DE-A1-102007 026 032
- DE-A1-102010 054 641
- US-A1- 2012 032 458

## Beschreibung

Die vorliegende Erfindung bezieht sich auf eine Fußgängerschutzvorrichtung für ein Kraftfahrzeug mit einem Querträger, insbesondere einem Stoßfängerquerträger, und einem Deformationselement, das vor dem Querträger angeordnet ist.

Ein bekannter Vorderwagen eines Kraftfahrzeugs hat bspw. einen Stoßfängerquerträger, der an vorderen Enden von Längsträgern bzw. Crash-Boxen befestigt ist, und eine Stoßfängerverkleidung. Zwischen der Stoßfängerverkleidung und dem Stoßfängerquerträger ist zum Schutz von Fußgängern ein auf einem vergleichsweise niedrigen Lastenniveau verformbarer Schaum angeordnet. Hierdurch wird ein Fußgänger im Falle einer Kollision des Kraftfahrzeugs mit dem Fußgänger vor einer direkten unmittelbaren Kollision mit einer dahinterliegenden steifen Struktur, wie dem Stoßfängerquerträger, geschützt. Der verformbare Schaum hat insbesondere in einem bestimmten Geschwindigkeitsbereich, wie bspw. von 20 bis 50 km/h, hinsichtlich des Fußgängerschutzes eine Wirkung.

Des Weiteren gibt es ein Erfordernis, dass in einem sehr niedrigen Geschwindigkeitsbereich von bis zu beispielsweise 4 km/h, in dem der Fußgängerschutz aufgrund der geringen Geschwindigkeit nicht relevant ist, das Kraftfahrzeug bei einer Kollision schadensfrei bleibt.

Darüber hinaus gibt es bei einer etwas höheren Geschwindigkeit, beispielsweise weniger als 20 km/h, die ebenfalls noch nicht für den Fußgängerschutz relevant ist, das Erfordernis, dass ein Schaden bei der Kollision möglichst klein ist und beispielsweise eine Kühlerstruktur, die sich in dem Vorderwagenbereich befindet, nicht beschädigt wird.

Bei einer Kollision mit einer vergleichsweise hohen Geschwindigkeit, die für einen Fußgängerschutz nicht mehr relevant ist, liegt ein Schwerpunkt auf der Auslegung des Kraftfahrzeugs und dessen Crashstruktur bei einem Insassenschutz. Hierfür ist der Vorderwagen bzw. ein Fahrzeugbug derart ausgelegt, dass er über eine bestimmte Verformungsstrecke sich energieabsorbierend verformt.

Die Anforderungen des Fußgängerschutzes stehen jedoch zum Teil im Widerspruch zu den Anforderungen bei niedrigeren oder höheren Geschwindigkeiten. Dieser Widerspruch kann jedoch grundsätzlich durch einen vergleichsweise langen Fahrzeugüberhang gelöst werden. Der lange Fahrzeugüberhang führt jedoch zu einer größeren Fahrzeuggesamtlänge sowie zu einem höheren Gewicht des Fahrzeugs. Ferner wird durch den langen Fahrzeugüberhang eine Fahrdynamik des Fahrzeugs unvorteilhaft beeinflusst.

Zum Lösen der daraus entstehenden Zielkonflikte wurde beispielsweise in der DE 102010054641 A1 eine Stoßfängeranordnung mit einem Querträger vorgeschlagen, der über Crashboxen an der Fahrzeugkarosserie befestigt ist. In Fahrtrichtung vor dem Querträger ist ein Fußgängerschutzelement für einen weichen Anprall eines Fußgängers ausgebildet. Zusätzlich ist ein schwenkbares Energieabsorptionselement vorgesehen, das vor das Fußgängerschutzelement verschwenkbar ist und hierdurch eine erhöhte Energieabsorption bei Kollisionen ermöglicht, bei denen eine höhere Kollisionsenergieabsorptionsfähigkeit der Crashstruktur des Kraftfahrzeugs erforderlich ist.

Die DE 102012112636 A1 zeigt ebenfalls eine Stoßfängeranordnung mit einem Stoßfängerquerträger und einem Fußgängerschutzelement, das von einem steifen Zustand in einen vergleichsweise weichen Zustand, der einem Fußgängerschutz dient, mittels eines Aktuators umgeschaltet werden kann.

Den in der DE 102010054641 A1 und der DE 102012112636 A1 beschriebenen Stoßfängeranordnungen ist gemeinsam, dass hierfür eine Crash- bzw. Pre-Crash-Sensorik erforderlich ist, wobei auf Grundlage der Ausgangssignale der Sensorik zwischen einem harten, steifen Zustand der Crashstruktur mit hoher Kollisionsenergieabsorptionsfähigkeit und einem weichen Zustand der Crashstruktur mit zu Gunsten des Fußgängerschutzes geringer Kollisionsenergieabsorptionsfähigkeit umgeschaltet werden kann.

Die DE 10 2007 026032 offenbart eine Fußgängerschutzvorrichtung für ein Kraftfahrzeug nach dem Oberbegriff des Anspruchs 1.

Es ist die Aufgabe der vorliegenden Erfindung, eine Fußgängerschutzvorrichtung mit einem Stoßfängerquerträger und einem Deformationselement, das vor dem Stoßfängerquerträger angeordnet ist, zu schaffen, die einfach aufgebaut ist und unabhängig von einer Sensorik bzw. einem Aktuator zwischen unterschiedlichen Steifigkeiten und/oder Festigkeiten schaltbar ist.

Diese Aufgabe wird durch eine Fußgängerschutzvorrichtung für ein Kraftfahrzeug gelöst, die die Merkmale von Patentanspruch 1 aufweist. Vorteilhafte Ausgestaltungen der Erfindung sind in den abhängigen Patentansprüchen genannt. Eine Fußgängerschutzvorrichtung für ein Kraftfahrzeug, insbesondere für einen Kraftfahrzeugbug des Kraftfahrzeugs, hat einen Querträger, insbesondere einen Stoßfängerquerträger, und ein Deformationselement, das vor dem Querträger angeordnet ist. Das Deformationselement weist einen Biege-Schenkel auf, dessen Ende an einer Fläche anliegt oder bei einer Kollision, insbesondere einer Frontalkollision, des Kraftfahrzeugs zur Anlage an der Fläche kommt. Das Ende des Biege-Schenkels ist infolge der Kollision entlang der Fläche verschiebbar ausgebildet, wobei die Fläche eine Rasteinrichtung aufweist, mit der das Ende des Biege-Schenkels, verrastbar ist.

Gemäß der vorliegenden Erfindung ist es somit möglich, dass eine Steifigkeit des Deformationselements durch Einrasten des Biege-Schenkels bei Verformung des Deformationselements infolge der Kollision erhöht wird, ohne dass es hier zu einer Kollisionssensorik bzw. einer Aktuatorik bedarf. Die Kollisionslast selbst bewirkt damit eine Versteifung des Deformationselements.

Der Begriff einrastbar ist im Sinne eines formschlüssigen Eingriffs des Endes des Biege-Schenkels mit der Rasteinrichtung verwendet.

Der Begriff Fußgänger umfasst im Sinne der Erfindung auch andere Verkehrsteilnehmer bzw. Nichtinsassen wie beispielsweise Zweiradfahrer. Die Vorrichtung könnte demnach auch Nichtinsassenschutzvorrichtung genannt werden.

Das Ende des Biege-Schenkels ist insbesondere ein freies Ende des Biege-Schenkels.

Die Angabe "vor dem Querträger" bedeutet insbesondere, dass das Deformationselement an einer Außenseite des Querträgers angeordnet ist, d.h. einer Seite des Querträgers, der einer Karosserieaußenhaut, beispielsweise in Form einer Stoßfängerverkleidung, zugewandt ist. Ferner kann die Außenseite des Querträgers die Seite sein, die der Richtung, aus der eine Kollisionslast zu erwarten ist, zugewandt ist.

Gemäß einer bevorzugten Weiterbildung der vorliegenden Erfindung sind der Biege-Schenkel, das Ende des Biege-Schenkels, die Fläche und die Rasteinrichtung derart zusammenwirkend ausgebildet, dass das Ende des Biege-Schenkels bei einem Kollisionsimpuls, der kleiner einem vorgegebenen Kollisionsimpuls bzw. einem Kollisionsimpulsschwellwert ist, mit der Rasteinrichtung verrastet und das Ende des Biege-Schenkels bei einem Kollisionsimpuls, der gleich oder größer dem vorgegebenen Kollisionsimpuls bzw. Kollisionsimpulsschwellwert ist, mit der Rasteinrichtung nicht verrastet, insbesondere über die Rasteinrichtung gelangt bzw. springt, und damit weiter verschiebbar ist. Insbesondere kann in letzterem Fall das Ende des Biegeschenkels weiter entlang der Fläche verschiebbar bzw. verlagerbar sein.

Somit kann das Deformationselement mit einfachen Mitteln unter Ausnutzung des Kollisionsimpulses je nach Kollisionsimpuls einen weniger steifen, weichen Zustand, in dem der Biege-Schenkel bzw. das Ende des Biege-Schenkels nicht eingerastet ist, oder einen steiferen, harten Zustand, in dem das Endes des Biege-Schenkels eingerastet ist, aufweisen. Gemäß einer bevorzugten Weiterbildung der Fußgängerschutzvorrichtung ist das Deformationselement im Falle einer Kollision, wenn das vordere Ende des Biege-Schenkels eingerastet ist, auf einem höheren Kraftniveau deformierbar oder versagt spröde bei dem höheren Kraftniveau, wobei, wenn das vordere Ende des Biege-Schenkels eingerastet ist, das Deformationselement auf einem höheren Kraftniveau deformierbar ist oder auf einem höheren Kraftniveau spröde versagt.

Bevorzugt ist die Fläche im Wesentlichen quer zu einer (Haupt-)Kollisionsrichtung oder zumindest parallel zu einer Fahrzeughochrichtung angeordnet. Insbesondere kann die Fläche im Wesentlichen quer zu einer Hauptfahrrichtung des Kraftfahrzeugs angeordnet sein. Als alternative Definition verläuft die Verschieberichtung des Endes des Biege-Schenkels quer, bevorzugt im Wesentlichen senkrecht zu einer Kollisionsrichtung. Die Kollisionsrichtung ist die Richtung aus der eine Kollisionslast von einem Kollisionsgegner zu erwarten ist.

Die Fläche kann eine ebene Fläche sein. Die Fläche kann jedoch auch eine andere Form aufweisen. Beispielsweise kann die Fläche im Bereich der Rasteinrichtung eine Stufe aufweisen. Die Fläche kann auch in geeigneter Weise gewellt sein.

Ferner kann die Fläche eine Aktivierungsschräge an einer Stelle zwischen dem Ende des Biege-Schenkels und der Rasteinrichtung aufweisen, die das Ende des Biege-Schenkels dabei unterstützt, dass es ab dem vorgegebenen Kollisionsimpuls über die die Rasteinrichtung springt und eine Verformung des Deformationselements auf einem niedrigen Lastniveau ermöglicht.

Die Fläche kann an dem Querträger oder einem querträgerfesten Teil ausgebildet sein. Die Fläche kann bspw. Bestandteil des Querträgers sein. Insbesondere kann die Fläche in einem Schließblech eines profilierten Querträgers ausgebildet sein.

Das Deformationselement kann im Wesentlichen bogenförmig und/oder U-förmig und/oder V-förmig oder dgl. ausgebildet sein.

Das Deformationselement kann aus einem umgeformten Blech einstückig ausgebildet sein.

Ein derartiges Deformationselement ist leicht herstellbar, kostengünstig und kann ein geringes Gewicht aufweisen.

Das Deformationselement kann jedoch auch aus mehreren Teilen bestehen, die miteinander verbunden sind.

Der Biege-Schenkel kann ferner gelenkig mit dem Deformationselement verbunden sein.

Es können mehrere Deformationselemente in Fahrzeugquerrichtung beabstandet zueinander vor dem Querträger angeordnet sein.

Damit kann über eine gesamte Erstreckung des Querträgers die kollisionsabhängige Deformationswirkung erzielt werden.

Es können jedoch auch mehrere Deformationselemente zu einem Deformationselement verbunden sein. Ein derartiges Deformationselement hat entsprechend mehrere Biege-Schenkel.

Hierdurch wird eine Montage erleichtert.

Gemäß einer bevorzugten Ausführungsform kann die Vertiefung eine Nut sein.

Eine Nut ist mit einfach und kostengünstig in einem Querträger ausbildbar.

Die Nut kann beispielsweise in Fahrzeugquerrichtung entlang des Querträgers im Wesentlichen über eine gesamte Breite des Querträgers verlaufen.

Das Deformationselement kann in Kollisionsrichtung und/oder Längsrichtung eine Länge von 50 bis 150 mm, bevorzugt 70 bis 110 mm aufweisen.

Diese Länge ist insbesondere für einen Fußgängerschutz relevant.

Das Deformationselement ist bevorzugt zwischen dem Querträger und einer Karosserieaußenhaut, beispielsweise einer Stoßfängerverkleidung, angeordnet. Ein Deformationsbereich des Deformationselements ist zwischen dem Querträger und der Karosserieaußenhaut ausgebildet.

Damit kann das Deformationselement seine Wirkung im Fall der Kollision unmittelbar wirken.

Das Deformationselement ist bevorzug aus Stahl oder Aluminium oder einer Aluminiumlegierung ausgebildet, kann jedoch auch aus einem faserverstärktem Kunststoff ausgebildet sein.

Vorstehend genannte Weiterbildungen der Erfindungen können soweit möglich und sinnvoll beliebig miteinander kombiniert werden.

Es folgt eine Kurzbeschreibung der Figuren.
- Fig. 1: ist eine schematische, geschnittene Seitenansicht einer Fußgängerschutzvorrichtung gemäß einem Ausführungsbeispiel der vorliegenden Erfindung.
- Fig. 2: ist eine schematische Perspektivansicht der Fußgängerschutzvorrichtung gemäß dem Ausführungsbeispiel der vorliegenden Erfindung.
- Fig. 3: ist eine schematische, geschnittene Seitenansicht der Fußgängerschutzvorrichtung gemäß dem Ausführungsbeispiel der vorliegenden Erfindung bei einer Kollision mit einem hohen Kollisionsimpuls.
- Fig. 4: ist eine schematische, geschnittene Seitenansicht der Fußgängerschutzvorrichtung gemäß dem Ausführungsbeispiel der vorliegenden Erfindung bei einer Kollision mit einem niedrigen Kollisionsimpuls.

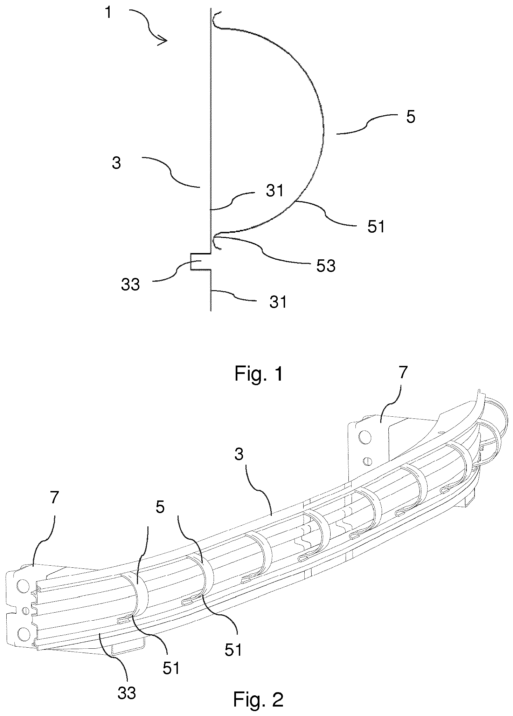

Im Folgenden ist ein Ausführungsbeispiel der vorliegenden Erfindung unter Bezugnahme auf Figuren 1 bis 4 beschrieben.

Wie in der schematischen Schnittansicht in Fig. 1 gezeigt ist, hat eine Fußgängerschutzvorrichtung 1 eines Kraftfahrzeugs, insbesondere eines Personenkraftfahrzeug, gemäß dem Ausführungsbeispiel der vorliegenden Erfindung einen vorderen Stoßfängerquerträger 3 und ein Deformationselement 5, das vor dem vorderen Stoßfängerquerträger 3 angeordnet ist. An dem vorderen Stoßfängerquerträger 3 ist eine im Wesentlichen nach vorn bzw. nach außen gerichtete Fläche 31 ausgebildet. Die Fläche 31 ist im Wesentlichen parallel zu einer Fahrzeughochrichtung ausgebildet und hauptsächlich senkrecht zu einer Fahrzeuglängsrichtung ausgebildet, wobei der Stoßfängerquerträger 3 mit der Fläche 31 an seinen Endabschnitten auch etwas nach hinten gebogen sein kann, wie in Fig. 2 gezeigt ist, so dass die Fläche 31 insbesondere in diesem Bereich nicht senkrecht zu der Fahrzeuglängsrichtung ausgebildet sein kann. In der Fläche 31 ist eine erfindungsgemäße Vertiefung in Form einer rechteckigen Nut 33 ausgebildet.

Das Deformationselement 3 ist bogenförmig aus einem umgeformten Blech ausgebildet und weist einen Biege-Schenkel 51 auf, dessen vorderes Ende 53 mit der Fläche 31 in Kontakt ist. Das andere Ende des bogenförmigen Deformationselements 5 ist geeignet mit dem Stoßfängerquerträger 3 form-, stoff- oder/und reibschlüssig verbunden.

Wie in Fig. 2 gezeigt ist, sind über eine gesamte Breite des Stoßfängerquerträgers 3 mehrere Deformationselemente 5 in Fahrzeugquerrichtung beabstandet zueinander angeordnet. Der Stoßfängerquerträger 3 ist über Crash-Boxen 7 an einem linken Längsträger und einem rechten Längsträger, die in der Fig. 2 nicht gezeigt sind, an der Fahrzeugkarosserie befestigt. Die Fläche 31 und die Nut 33 erstrecken sich ebenfalls über eine gesamte Breite des Stoßfängerquerträgers 3.

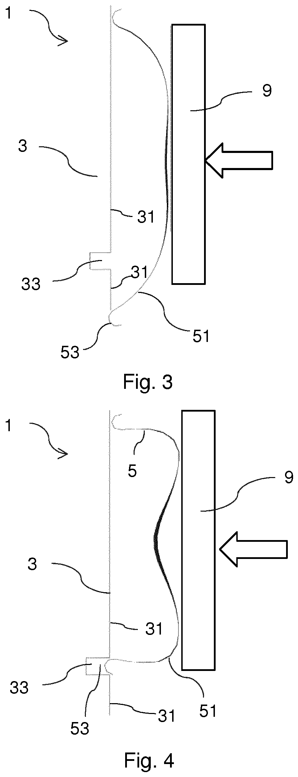

Nachfolgend ist eine Funktion der Fußgängerschutzvorrichtung 1 und ein unterschiedliches Steifigkeitsverhalten der Fußgängerschutzvorrichtung 1 unter Bezugnahme auf Figuren 3 und 4 beschrieben.

Im Falle einer Kollision, insbesondere einer Frontalkollision des Kraftfahrzeugs, bei der eine Last im Wesentlichen in Fahrzeuglängsrichtung wirkt, wird das Deformationselement 5 in Richtung des Stoßfängerquerträgers 3 beansprucht. Mit anderen Worten wird das Deformationselement 5 in Kollisionsrichtung, siehe die Richtungspfeile in Figuren 3 und 4, in Richtung des Stoßfängerquerträgers 3 gedrückt. Hierdurch resultierend wird der Biege-Schenkel 51, insbesondere das Ende des Biegeschenkels 53, entlang der Fläche 31 quer zum Stoßfängerquerträger 3, im vorliegenden Fall nach unten, gedrückt, während das Deformationselement 5 zusammengedrückt bzw. verformt wird. Das Ende des Biegeschenkels 53 bewegt sich damit bei der Kollision quer zu dem Stoßfängerquerträger 3 bzw. der Fläche 31 an dem Stoßfängerquerträger 3.

In Figur 3 ist eine Frontalkollision des Kraftfahrzeugs mit einem Fußgänger und eine entsprechende Verformung des Deformationselements 5 bei einer Geschwindigkeit in einem Bereich von ungefähr 20 km/h bis ungefähr 50 km/h gezeigt. Das Deformationselement 5 und der Stoßfängerquerträger 3 sind derart zusammenwirkend gestaltet, dass im Falle dieser Frontalkollision des Kraftfahrzeugs mit einem Fußgänger bei der Geschwindigkeit von über 20 km/h, d.h. mit einem Kollisionsimpuls oberhalb eines Kollisionsimpulsschwellwerts, das Ende 53 des Biege-Schenkels 51 entlang der Fläche 31 gleitet und dann über die Nut 33 springt und damit in dieser nicht einrastet. Nach dem Überspringen der Nut 33, kann der Biege-Schenkel 51 weiter entlang der Fläche 31 gleiten, während die Kollisionslast das Deformationselement 5 immer weiter in Richtung des Stoßfängerquerträgers 3 bzw. der Fläche 31 drückt und entsprechend verformt.

Eine Last, bei der das Deformationselement 5 hierbei verformt wird, ist mangels Eingriff / Einrastung des Biege-Schenkels 51 bzw. des Endes 53 des Biege-Schenkels 51 in die Nut verhältnismäßig niedrig. Somit kann das Deformationselement 5 die Erfordernisse eines Fußgängerschutzes in einem Geschwindigkeitsbereich von 20 bis 50 km/h erfüllen.

In Figur 4 ist eine Frontalkollision des Kraftfahrzeugs in dem Fall zeigt, in dem das Kraftfahrzeug bei einer geringeren Geschwindigkeit, d.h. bei einer Geschwindigkeit von weniger als 20 km/h kollidiert, wobei diese geringe Geschwindigkeit für einen Fußgängerschutz weniger relevant ist. Entsprechend der geringeren Geschwindigkeit ist dabei der Kollisionsimpuls geringer, sodass bei einer Verformung des Deformationselements 5 in Folge der Kollisionslast das vordere Ende 53 des Biegeschenkels 51 nicht über die Nut 33 springt, sondern in der Nut 33 formschlüssig einrastet. Das Deformationselement 5 ist derart gestaltet, dass hierdurch eine Verformung des Deformationselements 5 in Kollisionsrichtung, d.h. zu dem Stoßfängerquerträger hin, signifikant erschwert ist und damit die Verformung des Deformationselements 5 durch den formschlüssigen Eingriff des Deformationselements 5 in der Nut 33 bei einem wesentlich höheren Kraftniveau erfolgt. Das Deformationselement 5 kann dabei durch Verformung und gegebenenfalls sprödes Versagen hinreichend Kollisionsenergie absorbieren, so dass hinter dem Stoßfängerquerträger 3 angeordnete Elemente des Kraftfahrzeugs, wie beispielsweise ein Kühler, nicht beschädigt werden. Somit wird ein Reparaturaufwand bei Kollisionen mit niedrigen Geschwindigkeiten niedrig gehalten.

Gemäß alternativen Ausführungsbeispielen der vorliegenden Erfindung ist es auch möglich, dass beide Schenkel des bogenförmigen Deformationselements als Biege-Schenkel ausgebildet sind, die im Falle der Kollision in zueinander entgegengesetzte Richtungen verformbar ist und unterschiedliche Vertiefungen einrastbar sind.

Ferner ist es möglich, dass mehrere oder alle Deformationselemente miteinander zu einem einzigen Deformationselement verbunden sind, dass mehrere Biege-Schenkel aufweist.

## Patentansprüche

1. Fußgängerschutzvorrichtung für ein Kraftfahrzeug mit einem Querträger (3) und einem Deformationselement (5), das vor dem Querträger (3) angeordnet ist, wobei das Deformationselement (5) einen Biege-Schenkel (51) aufweist, dessen Ende (53) an einer Fläche (31) anliegt oder bei einer Kollision des Kraftfahrzeugs zur Anlage an der Fläche (31) kommt, wobei das Ende des Biege-Schenkels (51) in Folge der Kollision entlang der Fläche (53) verschiebbar ausgebildet ist,
**dadurch gekennzeichnet, dass**
an der Fläche (53) eine Rasteinrichtung (33) ausgebildet ist, mit der das Ende des Biege-Schenkels (51) in Folge der Kollision verrastbar ist.

2. Fußgängerschutzvorrichtung nach Patentanspruch 1, wobei der Biegeschenkel (51), das Ende (53) des Biege-Schenkels, die Fläche (31) und die Rasteinrichtung (33) derart zusammenwirkend ausgebildet sind, dass das Ende (53) des Biege-Schenkels (51) bei einem Kollisionsimpuls, der kleiner einem vorgegebenen Kollisionsimpuls ist, mit der Rasteinrichtung (33) verrastet und das Endes (53) des Biege-Schenkels (51) bei einem Kollisionsimpuls, der gleich oder größer dem vorgegebenen Kollisionsimpuls ist, nicht mit der Rasteinrichtung (33) verrastet und weiter verschiebbar ist.

3. Fußgängerschutzvorrichtung nach Patentanspruch 2, wobei im Falle einer Kollision, wenn das vordere Ende (53) des Biege-Schenkels (51) mit der Rasteinrichtung (33) verrastet ist, das Deformationselement (5) auf einem höheren Kraftniveau deformierbar ist oder spröde versagt, und wenn das vordere Ende (53) des Biege-Schenkels (51) nicht mit der Rasteinrichtung (33) verrastet, das Deformationselement (5) auf einem niedrigeren Kraftniveau deformierbar ist oder spröde versagt.

4. Fußgängerschutzvorrichtung nach einem der Patentansprüche 1 bis 3, wobei die Fläche (31) im Wesentlichen quer, insbesondere im Wesentlichen senkrecht, zu einer Kollisionsrichtung, insbesondere im Wesentlichen zu einer Hauptfahrtrichtung des Kraftfahrzeugs, angeordnet ist.

5. Fußgängerschutzvorrichtung nach einem der Patentansprüche 1 bis 4, wobei die Fläche (31) an dem Querträger (3) ausgebildet ist und insbesondere Bestandteil des Querträgers (3) ist.

6. Fußgängerschutzvorrichtung nach einem der Patentansprüche 1 bis 5, wobei das Deformationselement (5) im Wesentlichen bogenförmig und/oder U-förmig ausgebildet ist.

7. Fußgängerschutzvorrichtung nach einem der Patentansprüche 1 bis 6, wobei das Deformationselement (5), insbesondere einstückig, aus einem umgeformten Blech ausgebildet ist.

8. Fußgängerschutzvorrichtung nach einem der Patentansprüche 1 bis 7, wobei eine Vielzahl von Deformationselementen (5) in Fahrzeugquerrichtung beabstandet zueinander vor dem Querträger (3) angeordnet sind.

9. Fußgängerschutzvorrichtung nach einem der Patentansprüche 1 bis 8, wobei die Rasteinrichtung eine Vertiefung (33), insbesondere eine Nut, ist, in die das Ende des Biege-Schenkels (51) formschlüssig eingreifbar ist.

10. Fußgängerschutzvorrichtung nach einem der Patentansprüche 1 bis 9, wobei das Deformationselement (5) in Kollisionsrichtung und/oder in Längsrichtung eine Länge von 50 bis 150 mm, bevorzugt 70 bis 110 mm aufweist.

## Claims

1. A pedestrian protection device for a motor vehicle, comprising a crossbeam (3) and a deformation element (5) arranged in front of the crossbeam (3), the deformation element (5) having a bending leg (51), the end (53) of which is in contact with a surface (31) or which comes into contact with the surface (31) in the event of a collision of the motor vehicle, the end of the bending leg (51) being designed in such a way that it can move along the surface (53) as a result of the collision, **characterised in that** the surface (53) has an engaging device (33) with which the end of the bending leg (51) can be engaged as a result of the collision.

2. A pedestrian protection device according to Claim 1, the bending leg (51), the end (53) of the bending leg, the surface (31) and the engaging device (33) being designed to cooperate in such a way that the end (53) of the bending leg (51) engages with the engaging device (33) in the event of a collision impulse which is smaller than a specified collision impulse, and the end (53) of the bending leg (51) does not engage with the engaging device (33) and is further moveable in the event of a collision impulse which is the same size as or larger than the specified collision impulse.

3. A pedestrian protection device according to Claim 2, in which, in the event of a collision, when the front end (53) of the bending leg (51) engages with the engaging device (33), the deformation element (5) is deformable or breaks down in a brittle manner at a higher level of force, and when the front end (53) of the bending leg (51) does not engage with the engaging device (33), the deformation element (5) is deformable or breaks down in a brittle manner at a lower level of force.

4. A pedestrian protection device according to one of Claims 1 to 3, the surface (31) being arranged essentially transverse, in particular essentially vertical, to a collision direction, in particular, essentially to a main driving direction of the vehicle.

5. A pedestrian protection device according to one of Claims 1 to 4, the surface (31) being arranged on the crossbeam (3) and in particular being a component of the crossbeam (3).

6. A pedestrian protection device according to one of Claims 1 to 5, the deformation element (5) being formed essentially in an arch and/or U shape.

7. A pedestrian protection device according to one of Claims 1 to 6, the deformation element (5) being formed, in particular as one piece, from a formed sheet.

8. A pedestrian protection device according to one of Claims 1 to 7, a plurality of deformation elements (5) being arranged at a distance from one another in front of the crossbeam (3) in the transverse direction of the vehicle.

9. A pedestrian protection device according to one of Claims 1 to 8, the engaging device being a recess (33), in particular a groove, in which the end of the bending leg (51) can engage positively.

10. A pedestrian protection device according to one of Claims 1 to 9, the deformation element (5) having a length of 50 to 150 mm, preferably 70 to 110 mm, in a collision direction and/or longitudinal direction.

## Revendications

1. Dispositif de protection des piétons destiné à un véhicule comprenant une traverse (3) et un élément de déformation (5) qui est monté à l'avant de la traverse (3), l'élément de déformation (5) comprenant une branche de flexion (51) dont l'extrémité (53) s'applique sur une surface (31), ou vient en appui sur la surface (31) en cas d'une collision du véhicule, l'extrémité de la branche de flexion (51) pouvant se déplacer en translation le long de la surface (53) suite à la collision,
**caractérisé en ce que**
sur la surface (53) est formé un dispositif d'encliquetage (33) avec lequel l'extrémité de la branche de flexion (51) peut être encliquetée à la suite de la collision.

2. Dispositif de protection des piétons conforme à la revendications 1, dans lequel la branche de flexion (51), l'extrémité (53) de la branche de flexion, la surface (31) et le dispositif d'encliquetage (33) sont réalisés de façon à coopérer de sorte que, dans le cas d'une impulsion de collision qui est inférieure à une impulsion de collision prédéfinie, l'extrémité (53) de la branche de flexion (51) s'encliquète avec le dispositif d'encliquetage (33), et que dans le cas d'une impulsion de collision qui est égale ou supérieure à l'impulsion de collision prédéfinie, l'extrémité (53) de la branche de flexion (51) ne s'encliquète pas avec le dispositif d'encliquetage (33) et puisse encore se déplacer par translation.

3. Dispositif de protection des piétons conforme à la revendication 2, dans lequel dans le cas d'une collision, lorsque l'extrémité avant (53) de la branche de flexion (51) est encliquetée avec le dispositif d'encliquetage (33), l'élément de déformation (5) peut être déformé ou se rompre par fragilité pour un niveau de contrainte plus élevé, et lorsque l'extrémité avant (53) de la branche flexible (51) n'est pas encliquetée avec le dispositif d'encliquetage (33), l'élément de déformation (5) peut être déformé ou se rompre par fragilité pour un niveau de contrainte plus faible.

4. Dispositif de protection des piétons conforme à l'une des revendications 1 à 3,
dans lequel la surface (31) est essentiellement transversale, en particulier essentiellement perpendiculaire à une direction de collision en particulier essentiellement à la direction de déplacement principal du véhicule.

5. Dispositif de protection des piétons conforme l'une des revendications 1 à 4,
dans lequel la surface (31) est réalisée sur la traverse (3) et est en particulier une partie de cette traverse (3).

6. Dispositif de protection des piétons conforme à l'une des revendications 1 à 5,
dans lequel l'élément de déformation (5) est essentiellement en forme d'arc et/ou en forme de u.

7. Dispositif de protection des piétons conforme à l'une des revendications 1 à 6,
dans lequel l'élément de déformation (5) est réalisé en particulier en une seule pièce à partir d'une tôle mise en forme.

8. Dispositif de protection des piétons conforme à l'une des revendications 1 à 7,
dans lequel un ensemble d'éléments de déformation (5) sont installés à l'avant de la traverse (3) à distance les uns des autres dans la direction transversale du véhicule.

9. Dispositif de protection des piétons conforme à l'une des revendications 1 à 8,
dans lequel le dispositif d'encliquetage est un renfoncement (33) en particulier une rainure dans laquelle l'extrémité de la branche de flexion (51) peut venir en prise par une liaison par la forme.

10. Dispositif de protection des piétons conforme à l'une des revendications 1 à 9,
dans lequel l'élément de déformation (5) à une longueur de 50 à 150 mm de préférence de 70 à 110 mm dans la direction de collision et/ou dans la direction longitudinale.
